# FASCICULE DE BREVET EUROPEEN

(11) **EP 1 559 286 B1**
(45) Date de publication et mention de la délivrance du brevet: **26.08.2015**
(21) Numéro de dépôt: 03778460.0
(22) Date de dépôt: 24.10.2003
(51) Int. Cl.: H04W 12/08

(54) **SYSTÈME ET PROCÉDÉ DE GESTION D ACCÈS D'UN RÉSEAU DE COMMUNICATION A UN TERMINAL MOBILE**
SYSTEM UND VERFAHREN ZUR KOMMUNIKATIONSNETZWERKZUGRIFFSSTEUERUNG AUF EIN MOBILES ENDGERÄT
SYSTEM AND METHOD FOR MANAGING ACCESS OF A COMMUNICATION NETWORK TO A MOBILE TERMINAL

(30) Priorité: 31.10.2002 FR 0213701
(43) Date de publication de la demande: 03.08.2005
(73) Titulaire: Orange France, 92120 Montrouge (FR)
(72) Inventeur: ANNIC, Etienne, F-78120 Rambouillet (FR)
(74) Mandataire: Jeune, Pascale
(86) Numéro de dépôt international: PCT/FR2003/003176
(87) Numéro de publication internationale: WO 2004/043093

(56) Documents cités:
- WO-A-00/78080
- DE-A- 10 024 861
- GB-A- 2 366 705
- "Digital cellular telecommunications system (Phase 2+) (GSM);Universal Mobile Telecommunications System (UMTS); General Packet Radio Service (GPRS) Service decsription; Stage 2 (3GPP TS 23.060 version 3.8.0 Release 1999)" ETSI TS 123 060 V3.8.0, XX, XX, 1 juin 2001 (2001-06-01), XP002220269

## Description

La présente invention concerne un système et un procédé de gestion d'accès d'un réseau de communication à un terminal mobile.

L'invention s'applique plus particulièrement aux réseaux mobiles permettant l'accès à un terminal mobile à partir d'une pluralité de réseaux indépendants de communication offrant chacun un ensemble de services.

Actuellement, ces services sont accessibles à partir d'un terminal mobile raccordé aux réseaux de télécommunications mobiles, tel que le système GPRS (General Packet Radio Service, soit service général de radiocommunication en mode paquet) ou le système UMTS (Universal Mobile Telecommunications System, soit système universel de télécommunications avec les mobiles).

Actuellement, dans ces dits réseaux mobiles, l'utilisateur peut sélectionner un réseau de communication offrant des services en sélectionnant un nom identifiant ledit réseau de communication. Ensuite, pour établir une connexion entre un terminal mobile et un réseau de communication déterminé, ledit nom identifiant est transmis à travers le réseau mobile vers un équipement de gestion d'accès aux dits réseaux de communication.

Pour faciliter la compréhension, l'invention est décrite avec les appellations utilisées dans la terminologie des systèmes GPRS ou UMTS. Toutefois, l'invention s'applique à tous les systèmes de communication utilisant des techniques identiques d'identifcation et d'adressage d'un réseau de communication.

Dans les systèmes actuels de type GPRS ainsi que UMTS, le nom identifiant un réseau de communication est appelé un APN (Access Point Name, soit nom de point d'accès). Dans ces mêmes systèmes, l'équipement de support de service est appelé un SGSN (Serving GPRS Support Node, soit noeud de support de service GPRS) et l'équipement de gestion d'accès aux différents réseaux de communication est appelé GGSN (Gateway GPRS Service Node, soit noeud de service GPRS de transit).

Un nom identifiant APN comprend principalement un identifiant correspondant au réseau de communication sélectionné, un identifiant de l'opérateur qui gère ledit réseau de communication et un identifiant de la technologie du réseau mobile, par exemple GPRS ou UMTS. Le format, ainsi que l'usage, d'un nom identifiant APN sont normalisés par l'ETSI (European Télécommunications Standards Institute, soit institut européen de normalisation des télécommunications).

Entre autre fonction, un équipement de support de service SGSN reçoit d'un terminal mobile un nom identifiant APN et le transmet pour reconnaissance au serveur de nom identifiant APN auquel il est raccordé. Ledit serveur de nom identifiant APN répond à l'équipement de support de service SGSN en transmettant la liste des équipements de gestion d'accès GGSN associé au nom identifiant APN. Ledit équipement de support de service SGSN établit une connexion vers un équipement de gestion d'accès GGSN appartenant à ladite liste. Entre autre fonction, un équipement de gestion d'accès GGSN reconnaît un nom identifiant APN reçu d'un terminal mobile et établit la connexion vers un réseau de communication correspondant au nom identifiant APN. Ces équipements SGSN et GGSN sont également normalisés par l'ETSI.

Une fois sélectionné un nom identifiant APN sur le terminal mobile, un protocole d'accès démarre. En GPRS ou UMTS, ce protocole est appelé PDP (Packet Data Protocol, soit protocole de données en mode paquet). Une procédure d'établissement de la connexion du terminal mobile vers l'équipement de gestion d'accès dit GGSN est mise en oeuvre. Pour permettre l'établissement de la connexion, un lien est créé à travers le réseau mobile vers le réseau de communication sélectionné. En GPRS ou UMTS, ce lien est appelé «PDP Context ». Ce lien permet l'accès du terminal mobile à l'ensemble des services dudit réseau de communication.

A la fin de ladite procédure, le terminal reçoit une adresse en provenance du réseau de communication, avec lequel la connexion est établie. Cette adresse identifie ledit terminal au sein dudit réseau de communication. Elle est associée audit lien appelé "PDP Context", existant entre le terminal et ledit réseau de communication.

Par analogie avec la téléphonie sur réseau fixe de télécommunications et avec les systèmes mobiles de type GSM (Global System for Mobile communications, soit système global pour les communications avec les mobiles), la demande de connexion d'un terminal mobile vers un réseau de communication est appelée un "appel sortant".

De la même façon, une demande de connexion à partir d'un réseau de communication vers un terminal mobile est appelée une "appel entrant".

Actuellement, les opérateurs de réseaux de télécommunications mobiles GPRS ou UMTS proposent un établissement d'une connexion à partir dudit réseau de communication vers ledit terminal mobile selon la procédure d'activation d'une connexion à la demande d'un réseau de communication décrite dans l'alinéa (subclause) 9.2.2 de la norme ETSI TS123 060 v3.8.0 et selon l'enseignement de DE10024861.

Aussi, le problème technique à résoudre par l'objet de la présente invention est de proposer un système et un procédé de gestion d'accès d'une pluralité de réseaux de communication à un terminal mobile raccordé à un réseau de télécommunications mobiles, qui permettrait de remédier aux inconvénients des systèmes existants en réalisant un appel entrant vers un terminal mobile après vérification de l'autorisation pour la réception d'appels , entrants donnée par l'utilisateur d'un terminal mobile identifié ayant une adresse utilisateur et accessible au réseau de télécommunications mobiles.

La solution au problème technique posé consiste, selon la présente invention, en ce que ledit système de gestion d'accès d'une pluralité de réseaux de communication à un terminal mobile est apte à établir au moins une connexion à partir d'au moins un desdits réseaux de communication vers ledit terminal mobile.

Actuellement, l'établissement d'une connexion est mis en oeuvre à partir d'un terminal mobile par l'intermédiaire d'un équipement de gestion d'accès GGSN vers un réseau de communication.

Pour permettre l'établissement d'une connexion entre un terminal mobile et un réseau de communication, sont utilisés les équipements similaires à ceux d'un appel sortant présenté précédemment.

Un lien "PDP Context" est créé à travers le réseau de télécommunications mobiles à partir dudit réseau de communication vers le terminal mobile déterminé. Ledit terminal mobile reçoit une adresse en provenance dudit réseau de communication, avec lequel la connexion est établie. Cette adresse identifie ledit terminal au sein dudit réseau de communication. Elle est associée audit lien appelé "PDP Context", existant entre le terminal et ledit réseau de communication.

Ledit système de gestion d'accès, conforme à l'invention, va permettre une mise en oeuvre de l'établissement de la connexion à partir d'un réseau de communication vers un terminal mobile déterminé par l'intermédiaire d'interfaces spécifiques à ladite connexion plus souple notamment dans l'identification de l'utilisateur. Le système de gestion d'accès comporte au moins
- un serveur applicatif (30) apte à :
   ∘ transmettre un premier message commande avec un identifiant utilisateur vers un serveur de noms de domaine (31) puis à une interface de recherche d'adresse utilisateur,
   ∘ recevoir une adresse réseau d'une interface de recherche d'adresse utilisateur par l'intermédiaire d'un serveur de noms de domaine et
   ∘ établir une connexion à partir d' un desdits réseaux (20, 21, 22) de communication vers ledit terminal mobile (10),
- une interface de recherche d'adresse utilisateur (32) apte à attribuer une adresse utilisateur vers une interface de gestion d'appel entrant (34) et à recevoir l'adresse utilisateur et une adresse réseau d'une interface de gestion d'appel entrant,
- une interface (34) de gestion d'appel entrant apte à :
   ∘ contrôler l'existence de l'adresse utilisateur
   ∘ quand ladite adresse utilisateur n'existe pas, transmettre un troisième message de commande vers une interface de contrôle d'accès (35) par l'intermédiaire d'un serveur d'allocation d'dresse réseau (33) et,
   ∘ quand le terminal mobile est accessible et a des droits concernant l'émission d'un appel entrant à partir dudit réseau, transmettre un cinquième message de commande avec l'adresse utilisateur vers le serveur d'allocation d'adresse réseau et à transmettre vers l'interface de recherche d'adresse utilisateur l'adressé utilisateur et l'adresse réseau,
- une interface (35) de contrôle d'accès apte à transmettre un quatrième message de commande vers une interface d'autorisation d'accès (14)
- une interface d'autorisation d'accès (14) apte à vérifier l'accessibilité et les droits de l'utilisateur dudit terminal mobile concernant l'émission d'un appel entrant à partir dudit réseau de communication auprès du registre de localisation un serveur d'allocation d'adresse réseau (33) apte à attribuer une
adresse réseau et à transmettre l'adresse réseau à l'interface de gestion d'appel entrant.

Selon l'invention, ledit système comprend une interface (32) de recherche d'adresse utilisateur située dans un desdits réseaux (20, 21, 22) de communication, associée audit système de gestion d'accès selon l'une quelconque des revendications 1 à 4, caractérisé en ce que ladite interface de recherche d'adresse utilisateur est apte à attribuer une adresse utilisateur vers une interface de gestion d'appel entrant (34) et à recevoir l'adresse utilisateur et une adresse réseau d'une interface de gestion d'appel entrant.

Selon l'invention, ledit système comprend au moins une interface de recherche d'adresse utilisateur, située dans ledit réseau de communication, apte à attribuer au moins une adresse utilisateur audit terminal mobile à partir d'au moins une donnée d'un premier message de commande en provenance d'au moins un serveur de noms de domaine, situé dans ledit réseau de communication.

L'interface de recherche d'adresse utilisateur permet de connaître l'utilisateur dudit terminal mobile, avec lequel ledit réseau de communication va établir une connexion.

L'adresse utilisateur est déterminée à partir de l'identifiant de l'utilisateur dudit terminal mobile, transmis par l'intermédiaire d'un serveur applicatif et d'un serveur de noms de domaine, situés dans ledit réseau de communication auquel est abonné ledit terminal mobile.

Conformément à l'invention, le système comprend une interface (34) de gestion d'appel entrant située dans un desdits réseaux (20, 21, 22) de communication, associée audit système de gestion d'accès selon l'une quelconque des revendications 1 à 4, caractérisé en ce que ladite interface de gestion d'appel entrant est apte à
∘ contrôler l'existence de l'adresse utilisateur
∘ quand ladite adresse utilisateur n'existe pas, transmettre un troisième message de commande vers une interface de contrôle d'accès (35) par l'intermédiaire d'un serveur d'allocation d'dresse réseau (33) et,
∘ quand le terminal mobile est accessible et a des droits concernant l'émission d'un appel entrant à partir dudit réseau, transmettre un cinquième message de commande avec l'adresse utilisateur vers le serveur d'allocation d'adresse réseau et à transmettre vers l'interface de recherche d'adresse utilisateur l'adresse utilisateur et l'adresse réseau.

Conformément à l'invention, ledit système comprend au moins une interface de gestion d'appel entrant, située dans ledit réseau de communication, apte à attribuer au moins une adresse réseau audit terminal mobile après traitement de ladite adresse utilisateur à partir d'au moins une donnée d'un deuxième message de commande en provenance de ladite interface de recherche d'adresse utilisateur.

L'interface de gestion d'appel entrant permet de connaître ledit réseau de communication, qui va établir une connexion vers ledit terminal mobile.

L'adresse réseau est déterminée à partir de l'adresse utilisateur, par l'intermédiaire des données transmises par ladite interface de recherche d'adresse utilisateur.

Selon l'invention, le système comprend une interface (35) de contrôle d'accès située dans un desdits réseaux (20, 21, 22) de communication, associée audit système de gestion d'accès selon l'une quelconque des revendications 1 à 4, caractérisé en ce que ladite interface de contrôle d'accès est apte à transmettre un quatrième message de commande vers une interface d'autorisation d'accès (14).

Selon l'invention, ledit système comprend au moins une interface de contrôle d'accès, située dans ledit réseau de communication, apte à vérifier ladite adresse utilisateur dudit terminal mobile à partir d'au moins une donnée d'un troisième message de commande en provenance de ladite interface de gestion d'appel entrant.

La norme de l'ETSI prévoit que plusieurs connexions peuvent être établies simultanément entre un même terminal mobile et différents réseaux de communication.

Lorsque, par exemple, un terminal mobile est déjà connecté à un premier réseau de communication par un appel sortant, une adresse a été attribuée audit terminal mobile par ledit premier réseau de communication. Ensuite, lorsqu'un deuxième réseau de communication établit une connexion vers le même terminal mobile par un appel entrant, l'interface 35 de contrôle d'accès vérifie si ladite adresse utilisateur correspondant audit terminal mobile n'est pas déjà existante.

Selon l'invention, le système comprend une interface (14) d'autorisation d'accès située dans ledit réseau de télécommunications mobiles, associée audit système de gestion d'accès selon l'une quelconque des revendications 1 à 4, caractérisé en ce que ladite interface d'autorisation d'accès est apte à vérifier l'accessibilité et les droits de l'utilisateur dudit terminal mobile concernant l'émission d'un appel entrant à partir dudit réseau de communication auprès du registre de localisation.

Selon l'invention, ledit système comprend au moins une interface 14 d'autorisation d'accès, située dans ledit réseau de télécommunications mobiles, apte à vérifier ladite adresse réseau après traitement de ladite adresse utilisateur dudit terminal mobile à partir d'au moins une donnée d'un quatrième message de commande en provenance de ladite interface 35 de contrôle d'accès.

Dans un réseau de télécommunications mobiles, comme l'appel est émis par un terminal mobile pour le cas d'un appel sortant à partir dudit terminal mobile, l'adressage est géré par un registre de localisation appelé HLR (soit Home Location Register).

Pour le cas d'un appel entrant vers un terminal mobile, l'appel est émis par ledit réseau de communication et l'adressage est géré par un équipement de gestion d'accès GGSN. Selon le type d'appel, sortant ou entrant, la gestion de l'adressage est réalisée par différents équipements du réseau de télécommunications mobiles.

Ladite interface de contrôle d'accès, située dans ledit réseau de communication, permet d'entrer en liaison avec le réseau de télécommunications mobiles, auquel est raccordé l'utilisateur dudit terminal mobile, par l'intermédiaire de l'interface d'autorisation d'accès qui est reliée audit registre de localisation. '
- L'invention a également pour objet un procédé de gestion d'accès d'une pluralité de réseaux de communication à un terminal mobile, raccordé à un réseau de télécommunications mobiles, remarquable en ce que ledit procédé comporte les étapes suivantes : transmettre un premier message de commande avec un identifiant utilisateur à partir d'un serveur applicatif (30) vers au moins un serveur (31) de noms de domaine d'un desdits réseaux (20, 21, 22) de communication,
- puis transmettre ledit premier message de commande à partir dudit serveur (31) de noms de domaine vers au moins une interface (32) de recherche d'adresse utilisateur dudit réseau (20, 21, 22) de communication pour attribuer au moins une adresse utilisateur audit terminal mobile (10),
- transmettre un deuxième message de commande avec l'adresse utilisateur à partir de ladite interface (32) de recherche d'adresse utilisateur vers une interface (34) de gestion d'appel entrant dudit réseau (20, 21, 22) de communication,
- contrôler l'existence de ladite adresse utilisateur reçue dans ladite interface (34) de gestion d'appel entrant, reliée à au moins un serveur (33) d'allocation d'adresse réseau,
   ∘ quand l'adresse utilisateur n'existe pas,
      ▪ transmettre à partir de l'interface de gestion d'appel entrant un troisième message de commande vers une interface de contrôle d'accès par l'intermédiaire du serveur d'allocation d'adresse réseau,
      ▪ transmettre un quatrième message de commande à partir de ladite interface (35) de contrôle d'accès vers au moins une interface (14) d'autorisation d'accès, située dans ledit réseau de télécommunications mobiles,
      ▪ vérifier, au moyen de l'interface d'autorisation d'accès (14), l'accessibilité audit réseau de télécommunications mobiles et les droits de l'utilisateur dudit terminal mobile concernant l'émission d'un appel entrant à partir dudit réseau de communication auprès du registre (13) de localisation dudit réseau de télécommunications mobiles, relié à ladite interface (14) d'autorisation d'accès,
   ∘ quand le terminal mobile est accessible et a des droits concernant l'émission d'un apple entrant à partir dudit réseau, transmettre à partir de ladite interface de gestion d'appel entrant (34) un cinquième message de commande avec l'adresse utilisateur vers le serveur d'allocation d'adresse réseau,
- attribuer et transmettre une adresse réseau à partir du serveur d'allocation d'adresse à l'interface de gestion d'appel entrant,
- recevoir à la dite interface de recherche d'adresse utilisateur l'adresse utilisateur et l'adresse réseau de l'interface de gestion d'appel entrant (34),
- recevoir audit serveur applicatif l'adresse réseau d'une interface de recherche d'adresse utilisateur par l'intermédiaire d'un serveur de noms de domaine
- établir, au moyen dudit serveur applicatif, une connexion à partir dudit réseau (20, 21, 22) de communication vers ledit terminal mobile (10).

Lorsque ledit terminal mobile peut gérer plusieurs connexions, une première adresse va être attribuée pour un appel sortant et une deuxième adresse va être attribuée pour un appel entrant. Lorsque l'appel sortant et l'appel entrant sont établis entre un terminal mobile et le même réseau de communication, deux adresses peuvent être attribuées pour ledit terminal mobile par un seul réseau de communication.

Dans ce cas, l'attribution d'une deuxième adresse n'est pas nécessaire pour ledit terminal mobile, qui possède déjà une première adresse attribuée par le même réseau de communication. Le manque d'adresses disponibles se faisant sentir, ce double adressage est un gaspillage des ressources en adresse qui ont évidemment un nombre limité.

Ladite interface de gestion d'appel entrant, reliée au serveur d'allocation d'adresse réseau dudit réseau de communication, va permettre d'éviter l'attribution de deux adresses pour ledit terminal mobile.

Conformément à l'invention, les étapes suivantes dudit procédé de gestion d'accès consistent à : - transmettre au moins un quatrième message de commande pour réaliser au moins un traitement de ladite adresse utilisateur à partir de ladite interface de contrôle d'accès vers au moins une interface d'autorisation d'accès, située dans ledit réseau de télécommunications mobiles ; - vérifier l'accessibilité et les droits de l'utilisateur dudit terminal mobile dans au moins un registre de localisation dudit réseau de télécommunications mobiles, relié à ladite interface d'autorisation d'accès ; - transmettre, pour réaliser une mise en forme des données, ladite accessibilité et lesdits droits de l'utilisateur dudit terminal mobile à partir de ladite interface d'autorisation d'accès, située dans ledit réseau de télécommunications, vers ladite interface de contrôle d'accès, située dans ledit réseau de communication ; - transmettre pour analyse ladite accessibilité et lesdits droits de l'utilisateur dudit terminal mobile à partir de ladite interface de contrôle d'accès vers ladite interface de gestion d'appel entrant.

Actuellement, il existe des terminaux mobiles, qui ne gèrent simultanément qu'une connexion avec un réseau de communication. Ils ne peuvent recevoir simultanément qu'une seule adresse, associée à un lien appelé "PDP Context", en provenance d'un seul réseau de communication.

Dans ce cas, après un appel sortant, un appel entrant en provenance dudit réseau de communication ne peut aboutir. Par conséquent, les droits de l'utilisateur n'autorisent pas un appel entrant.

De plus, lorsque ledit terminal mobile peut gérer plusieurs connexions, l'utilisateur dudit terminal mobile peut ne pas autoriser un appel entrant en provenance d'un desdits réseaux de communication, par exemple pour empêcher la diffusion de messages de publicité à partir d'un réseau de communication déterminé.

Selon l'invention, dans le cas des non-accessibilité ou d'ab-sence de droits pour l'utilisateur dudit terminal mobile, ladite interface de gestion d'appel entrant transmet un premier message d'échec vers ladite interface de recherche d'adresse utilisateur, puis ladite interface de recherche d'adresse utilisateur transmet ledit premier message d'échec vers ledit serveur de noms de domaine et vers ledit serveur applicatif pour traitement de manière à ne pas établir la connexion entre ledit réseau de communication et ledit terminal mobile.

Les différentes interfaces, spécifiques à une connexion par un appel entrant, dialogue avec les différents serveurs en place dans ledit réseau de communication de manière à transmettre les données nécessaires pour la gestion d'accès.

Lorsque l'établissement de la connexion n'est pas autorisé, différents messages d'échec sont transmis entre les différents équipements dudit réseau de communication.

Conformément à l'invention, les étapes suivantes dudit procédé de gestion d'accès consistent à : - transmettre ladite adresse utilisateur à partir de ladite interface de recherche d'adresse utilisateur vers ledit serveur de noms de domaine, puis vers ledit serveur applicafif ; - transmettre au moins une donnée avec ladite adresse utilisateur à partir dudit serveur applicatif vers au moins un équipement de gestion d'accès dudit réseau de télécommunications mobiles.

Conformément à l'invention, dans le cas de reconnaissance de ladite adresse utilisateur, ledit équipement de gestion d'accès transmet ladite donnée vers au moins un équipement de support de service, puis vers ledit terminal mobile, après établissement de la connexion entre ledit réseau de communication et ledit terminal mobile.

Lorsque toutes les vérifications réalisées par les différentes interfaces par l'intermédiaire des différents serveurs dudit réseau de communication sont réalisées, l'adresse réseau correspondant audit terminal mobile est transmise à l'équipement de gestion d'accès dans ledit réseau de télécommunications mobiles.

L'appel entrant alors est autorisé et la connexion est établie à partir dudit réseau de communication vers ledit terminal mobile, qui reçoit les données en provenance dudit réseau de communication.

La description qui va suivre en regard des dessins annexés, donnés à titre d'exemple non limitatif, fera bien comprendre en quoi consiste l'intention et comment elle peut être réalisée.

La figure 1 est un schéma de l'architecture générale du système de gestion d'accès d'une pluralité de réseaux de communication à un terminal mobile, conforme à l'invention.

La figure 2 est une représentation des étapes du procédé de gestion d'accès d'un réseau de communication à un terminal mobile, conforme à l'invention.

Pour simplifier la description, l'équipement raccordé au réseau de télécommunications mobiles est indiqué comme un terminal mobile 10, mais il peut être de différentes natures, par exemple un serveur ou un terminal de communication mobile ou bien un ordinateur personnel de type PC.

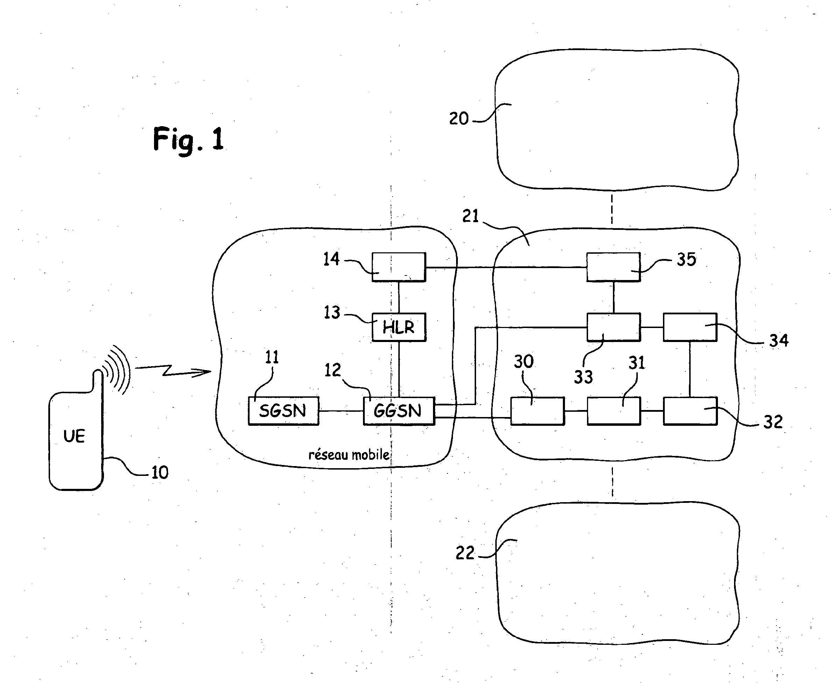

Sur la figure 1, qui représente dans son ensemble un système de gestion d'accès d'une pluralité de réseaux 20, 21, 22 de communication à un terminal mobile 10, ledit terminal mobile 10 est symbolisé par un équipement d'abonné 10 appelé UE (User Equipment).

Quel que soit le terminal mobile 10 utilisé, celui-ci est relié à un réseau de télécommunications mobiles public auquel l'utilisateur est abonné.

L'invention s'applique à tous les réseaux 20, 21, 22 de communication utilisant des techniques équivalentes d'identification et d'adressage vers un terminal mobile 10.

Le terminal mobile 10 est raccordé à tout type de réseau de télécommunications pour des mobiles permettant la transmission en mode paquet vers un terminal mobile 10, par exemple un réseau mobile de type GPRS (General Packet Radio Service, soit service général de radiocommunication en mode paquet) ou UMTS (Universal Mobile Télécommunications System, soit système universel de télécommunications avec les mobiles).

L'utilisateur est également abonné à une pluralité de réseaux indépendants 20, 21, 22 de communication offrant chacun un ensemble de services. Ledit utilisateur met en mémoire dans son terminal mobile 10 chaque nom APN identifiant un réseau 20, 21, 22 de communication.

Lorsque l'utilisateur du terminal mobile 10 sélectionne un nom identifiant APN mémorisé, une connexion est établie avec un desdits réseaux 20, 21, 22 de commumication, à travers le réseau de télécommunications mobiles. Ledit terminal mobile a établit une liaison vers un des réseaux 20, 21, 22 de communication, liaison appelée un appel sortant. Comme précisé précédemment, un nom APN identifie chacun desdits réseaux 20, 21, 22 de communication.

Ledit nom identifiant APN est transmis vers un équipement 11 de support de service SGSN, relié à un serveur de nom APN qui possède une table de correspondance entre les noms APN et les équipements de gestion d'accès GGSN. Après sélection grâce à ladite table de correspondance, un équipement 12 de gestion d'accès GGSN établit la connexion avec ledit réseau 20, 21, 22 de communication.

Au contraire d'un appel sortant, un appel entrant permet d'établir une connexion à partir d'un desdits réseaux 20, 21, 22 de communication vers ledit terminal mobile 10, comme expliqué précédemment.

Ainsi que représenté sur la figure 1, un serveur applicatif 30 ou AS (Application Server), appartenant à un desdits réseaux 20, 21, 22 de communication, recherche l'identifiant de l'utilisateur dudit terminal mobile 10 pour initialiser ledit appel entrant.

L'initialisation d'un appel entrant à partir d'un réseau 20, 21, 22 de communication vers un terminal mobile 10 peut être réalisée par différents équipements dudit réseau 20, 21, 22 de communication, tel que ledit serveur applicatif 30 (ou AS) ou bien tout autre équipement dudit réseau de communication, par exemple tout terminal ayant accès audit serveur applicatif 30 (ou AS) dudit réseau 20, 21, 22 de communication.

Ledit serveur applicatif 30 (ou AS) sollicite un serveur 31 de noms de domaine (soit DNS, Domain Name Server), qui est situé dans ledit réseau 20, 21, 22 de communication. Ledit serveur 31 de noms de domaine DNS déclenche le traitement de l'identifiant de l'utilisateur dudit terminal mobile 10 par une interface 32 de recherche d'adresse utilisateur.

Ladite interface 32 de recherche d'adresse utilisateur peut être physiquement située ou non dans ledit serveur 31 de noms de domaine DNS

Ladite interface 32 de recherche d'adresse utilisateur transmet une adresse utilisateur correspondant audit terminal mobile 10 vers une interface 34 de gestion d'appel entrant dans ledit réseau 20, 21, 22 de communication. Ladite interface 34 de gestion d'appel entrant réalise le traitement de ladite adresse utilisateur par contrôle de l'existence ou non de ladite adresse utilisateur.

Lorsque ladite adresse utilisateur correspondant audit terminal mobile 10 est déjà existante, ladite interface 34 de gestion d'appel entrant renvoie ladite adresse utilisateur à ladite interface 32 de recherche d'adresse utilisateur.

Lorsqu'il n'existe pas d'adresse utilisateur correspondant audit terminal mobile 10, ladite interface 34 de gestion d'appel entrant sollicite un serveur 33 d'allocation d'adresse réseau. Ledit serveur 33 d'allocation d'adresse réseau (ou Radius, Remote Authentification Dial-In User Service) est situé dans ledit réseau 20, 21, 22 de communication.

Ladite interface 34 de gestion d'appel entrant peut être physiquement située ou non dans ledit serveur 33 d'allocation d'adresse réseau (ou Radius).

Ledit serveur 33 d'allocation d'adresse réseau (ou Radius) sollicite une interface 35 de contrôle d'accès, qui déclenche le traitement de ladite adresse réseau. Ladite interface 35 de contrôle d'accès peut également être physiquement située ou non dans ledit serveur 33 d'allocation d'adresse réseau (ou Radius).

Ladite interface 35 de contrôle d'accès attribue une adresse réseau correspondant audit réseau 20, 21, 22 de communication, transmise à une interface 14 d'autorisation d'accès située dans le réseau de télécommunications mobiles.

Ladite interface 14 d'autorisation d'accès sollicite un registre 13 de localisation (soit HLR, Home Location Register), qui est situé dans le réseau de télécommunications mobiles. Ladite interface 14 d'autorisation d'accès peut être physiquement incluse ou non dans ledit registre 13 de localisation HLR.

Ledit registre 13 de localisation HLR vérifie l'accessibilité et les droits de l'utilisateur dudit terminal mobile 10 concernant l'émission d'un appel entrant à partir dudit réseau 20, 21, 22 de communication.

En fonction du résultat de la vérification, ladite interface 14 d'autorisation d'accès répond à ladite interface 35 de contrôle d'accès, qui transmet à ladite interface 34 de gestion d'appel entrant, en autorisant ou non l'appel entrant.

Lorsque l'appel entrant n'est pas autorisé, le traitement est terminé et la connexion n'est pas établie entre ledit réseau 20, 21, 22 de communication et ledit terminal mobile 10.

Lorsque l'appel entrant est autorisé, ladite interface 34 de gestion d'appel attribue une adresse réseau audit terminal mobile 10, transmise à ladite interface 32 de recherche d'adresse utilisateur.

Ladite interface 32 de recherche d'adresse utilisateur attribue une adresse utilisateur correspondant audit terminal mobile 10, transmise audit serveur 31 de noms de domaine DNS, puis audit serveur applicatif 30 (ou AS).

Ledit serveur applicatif 30 (ou AS) sollicite un équipement 12 de gestion d'accès GGSN, relié à un équipement 11 de support de service SGSN, dudit réseau de télécommunications mobiles auquel ledit terminal mobile 10 est raccordé.

La connexion, correspondant à l'appel entrant, est établie entre l'un des réseaux 20, 21, 22 de communication et ledit terminal mobile 10.

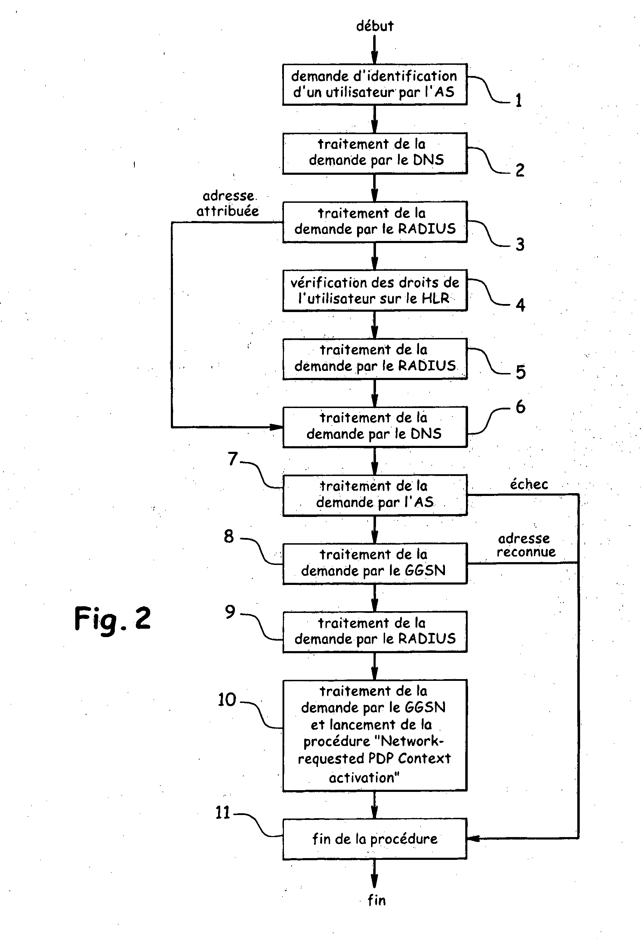

Pour aider à comprendre l'invention, les différentes étapes du procédé de gestion d'accès d'un réseau de communication à un terminal mobile sont présentées en figure 2.

Dans un réseau 20, 21, 22 de communication, l'utilisateur du terminal mobile 10 est identifié dans chacun des équipements dudit réseau 20, 21, 22 de communication.

L'identification de l'utilisateur d'un terminal mobile 10 dans un réseau 20, 21, 22 de communication peut se présenter sous différentes formes. A titre d'exemple, un identifiant d'un utilisateur peut correspondre au nom et au prénom dudit utilisateur, sous la forme "nom.prénom", ou bien se présenter sous la forme "0607080910.réseaudecommunication" correspondant à un numéro d'identification dudit utilisateur et à l'identification dudit réseau 20, 21, 22 de communication concerne.

Pour faciliter la compréhension dans la description, l'identification de l'utilisateur est présentée sous la forme utilisée par les adresses IP (Internet Protocol, soit protocole internet). Mais, toute autre forme d'adressage offrant des fonctionnalités similaires d'identification de l'utilisateur est compatible avec l'invention.

Un serveur applicatif 30 (ou AS) dudit réseau 20, 21, 22 de communication accède à l'identifiant de l'utilisateur du terminal mobile 10, qui est le destinataire de l'appel entrant (étape 1).

Quelle que soit la forme existante dans ledit réseau 20, 21, 22 de communication, l'identifiant de l'utilisateur correspond à "id AS utilisateur" dans ledit serveur applicatif 30 (ou AS).

Le serveur applicatif 30 (ou AS) transmet un message de commande "id AS utilisateur, commande" vers un serveur 31 de noms de domaine DNS dudit réseau 20, 21, 22 de communication, correspondant à une demande d'identification dudit utilisateur du terminal mobile 10.

Le protocole de transmission pour allouer une adresse, utilisé entre un serveur applicatif 30 (ou AS) et un serveur 31 de noms de domaine DNS, est défini par l'IETF (Internet Engineering Task Force, soit groupe d'étude sur l'ingénierie Internet), par exemple le protocole DNS.

Le serveur 31 de noms de domaine DNS transmet pour traitement ledit message de commande vers une interface 32 de recherche d'adresse utilisateur (étape 2).

Quelle que soit la forme existante, l'identifiant de l'utilisateur correspond à "id DNS utilisateur" dans ledit serveur 31 de noms de domaine DNS. Ledit identifiant "id DNS utilisateur" correspond à l'utilisateur mentionné dans le message de commande "id AS utilisateur, commande".

Pour connaître ledit identifiant "id DNS utilisateur", l'interface 32 de recherche d'adresse utilisateur peut soit accéder à une table de correspondance "id AS utilisateur, id DNS utilisateur", soit construire ledit identifiant à partir de l'identifiant reçu dans le message de commande "id AS utilisateur, commande" en provenance du serveur applicatif 30 (ou AS).

Ladite interface 32 de recherche d'adresse utilisateur, reliée au serveur 31 de noms de domaine DNS, transmet un message de commande "id DNS utilisateur, commande" vers une interface 34 de gestion d'appel entrant, reliée à un serveur 33 d'allocation d'adresse réseau (ou Radius), pour réaliser le traitement de ladite adresse utilisateur (étape 3).

Le protocole de transmission pour allouer une adresse, utilisé entre une interface 32 de recherche d'adresse utilisateur reliée à un serveur 31 de noms de domaine DNS et une interface 34 de gestion d'appel entrant reliée à un serveur 33 d'allocation d'adresse réseau (ou Radius), par exemple le protocole DNS ou le protocole Radius sont définis par l'IETF (Internet Engineering Task Force, soit groupe d'étude sur l'ingénierie Internet).

Quelle que soit la forme existante, l'identifiant de l'utilisateur correspond à "id réseau utilisateur" dans ledit serveur 33 d'allocation d'adresse réseau (ou Radius). Ledit identifiant "id réseau utilisateur" correspond à l'utilisateur mentionné dans le message de commande "id DNS utilisateur, commande".

Pour connaître ledit identifiant "id réseau utilisateur", l'interface 34 de gestion d'appel entrant peut soit accéder à une table de correspondance "id DNS utilisateur, id réseau utilisateur", soit construire ledit identifiant à partir de l'identifiant reçu dans le message de commande "id DNS utilisateur, commande" en provenance de ladite interface 32 de recherche d'adresse utilisateur reliée au serveur 31 de noms de domaine DNS.

De manière à éviter l'attribution d'une deuxième adresse correspondant à un même utilisateur dudit terminal mobile 10, ladite interface 34 de gestion d'appel entrant reliée au serveur 33 d'allocation d'adresse réseau (ou Radius) contrôle l'existence ou non d'une adresse déjà attribuée à l'utilisateur mentionné dans le message "id DNS utilisateur, commande".

Lorsque le terminal mobile 10 de l'utilisateur a déjà établi une connexion avec ledit réseau 20, 21, 22 de communication, une première adresse a été attribuée correspondant audit utilisateur. De ce fait, une adresse correspondant audit utilisateur existe dans ladite interface 34 de gestion d'appel entrant reliée au serveur 33 d'allocation d'adresse réseau (ou Radius).

Ladite interface 34 de gestion d'appel entrant reliée au serveur 33 d'allocation d'adresse réseau (ou Radius) transmet un message "id DNS utilisateur, adresse IP" vers l'interface 32 de recherche d'adresse utilisateur reliée au serveur 31 de noms de domaine DNS. Dans ce cas, les étapes 4 et 5 du procédé conforme à l'invention, décrites ci-dessous, ne sont pas réalisées.

Lorsqu'il n'existe pas d'adresse correspondant audit utilisateur du terminal mobile 10, ladite interface 34 de gestion d'appel entrant transmet un message de commande "id réseau utilisateur, APN, commande" vers un serveur 33 d'allocation d'adresse réseau (ou Radius). Ledit serveur 33 d'allocation d'adresse réseau (ou Radius) dirige ledit message de commande "id réseau utilisateur, APN, commande" vers une interface 35 de contrôle d'accès pour réaliser le traitement correspondant au réseau et à l'utilisateur.

L'accessibitité et les droits de l'utilisateur dudit terminal mobile 10 sont mémorisés dans le registre 13 de localisation HLR dudit réseau de télécommunications mobiles, auquel l'utilisateur est abonné. Par conséquent, ladite interface 35 de contrôle d'accès, reliée au serveur 33 d'allocation d'adresse réseau (ou Radius), transmet ledit message de commande vers une interface 14 d'autorisation d'accès dudit réseau de télécommunications mobiles.

Ladite interface 14 d'autorisation d'accès transmet ledit message de commande à un registre 13 de localisation HLR dudit réseau de télécommunications mobiles (étape 4).

Ledit registre 13 de localisation HLR vérifie l'accessibilité et les droits dudit utilisateur concernant l'émission d'un appel entrant à partir dudit réseau 20, 21, 22 de communication, identifié par un nom identifiant APN et auxquels appartient ledit serveur 33 d'allocation d'adresse réseau (ou Radius), ainsi que ledit serveur 31 de noms de domaine DNS et ledit serveur applicatif 30 (ou AS).

Le protocole de transmission pour allouer une adresse, utilisé entre une interface 35 de contrôle d'accès reliée à un serveur 33 d'allocation d'adresse réseau (ou Radius) et une interface 14 d'autorisation d'accès reliée à un registre 13 de localisation HLR, est soit défini par l'IETF, par exemple le protocole Radius ou le protocole Diameter, soit défini par l'ETSI (European Telecommunications Standards Institute, soit institut européen de normalisation des télécommunications), par exemple le protocole MAP (Mobile Application Part, soit application du service mobile) qui est spécifique pour les réseaux de télécommunications mobiles gérés par un opérateur.

L'accessibilité de l'utilisateur correspond à la possibilité d'établir une connexion avec ledit terminal mobile 10 de l'utilisateur, par exemple le terminal mobile est bien reconnu par le réseau de télécommunications mobiles. Les droits de l'utilisateur correspondent à l'existence d'un abonnement ou d'une autorisation donnée par l'utilisateur concernant la réception d'appels entrants en provenance dudit réseau 20, 21, 22 de communication concerné.

Le registre 13 de localisation HLR transmet un message "id réseau utilisateur, accessibilité utilisateur, autorisation utilisateur" vers ladite interface 14 d'autorisation d'accès.

Le registre 13 de localisation HLR peut également insérer dans ledit message transmis l'adresse de l'équipement 11 de support de service SGSN, qui est disponible pour établir une connexion dudit réseau 20, 21, 22 de communication avec ledit terminal mobile 10 de l'utilisateur.

Une fois l'accessibilité et les droits de l'utilisateur dudit terminal mobile renseignés, ladite interface 14 d'autorisation d'accès transmet ledit message vers ladite interface 35 de contrôle d'accès, reliée au serveur 33 d'allocation d'adresse réseau (ou Radius) du réseau 20, 21, 22, 23 de communication.

Comme mentionné précédemment, le protocole de transmission, utilisé entre une interface 14 d'interrogation d'accès reliée à un registre 13 de localisation HLR et une interface 35 de contrôle d'accès reliée à un serveur 33 d'allocation d'adresse réseau (ou Radius), est par exemple le protocole Radius ou le protocole Diameter ou le protocole MAP.

Le serveur 33 d'allocation d'adresse réseau (ou Radius) reçoit le message en provenance du registre 13 de localisation HLR (étape 5).

Dans le cas où la mention "accessibilité utilisateur" du message transmis indique que l'utilisateur n'est pas présent sur le réseau de télécommunications mobiles ou bien lorsque la mention "autorisation utilisateur" indique un choix de l'utilisateur de ne pas recevoir d'appels entrants en provenance dudit réseau de communication concerné et identifié par ledit nom identifiant APN, l'interface 34 de gestion d'appel entrant reliée au serveur 33 d'allocation d'adresse réseau (ou Radius) transmet un message "id DNS utilisateur, cause échec" vers l'interface 32 de recherche d'adresse utilisateur reliée au serveur 31 de noms de domaine DNS, qui indique la raison de l'échec de l'établissement de la connexion vers le terminal mobile 10 de l'utilisateur.

Dans le cas contraire, l'interface 34 de gestion d'appel entrant sollicite ledit serveur 33 d'allocation d'adresse réseau (ou Radius) pour attribuer une adresse à l'utilisateur pour la connexion avec, ledit réseau 20, 21, 22 de communication.

Ladite interface 34 de gestion d'appel entrant reliée au serveur 33 d'allocation d'adresse réseau (ou Radius) transmet un message "id DNS utilisateur, adresse IP" vers l'interface 32 de recherche d'adresse utilisateur reliée au serveur 31 de noms de domaine DNS.

Comme mentionné précédemment, le protocole de transmission, utilisé entre une interface 34 de gestion d'appel entrant reliée à un serveur 33 d'allocation d'adresse réseau (ou Radius) et une interface 32 de recherche d'adresse utilisateur reliée à un serveur 31 de noms de domaine DNS, est par exemple le protocole DNS ou le protocole Radius.

Le serveur 31 de noms de domaine DNS reçoit le message en provenance du serveur 33 d'allocation d'adresse réseau (ou Radius) (étape 6).

Dans le cas où le message en provenance du serveur 33 d'allocation d'adresse réseau (ou Radius) est un message "id DNS utilisateur, cause échec", le serveur 31 de noms de domaine DNS transmet un message "id AS utilisateur, cause échec" vers le serveur applicatif 30 (ou AS), qui indique la raison de l'échec de l'établissement de la connexion vers le terminal mobile 10 de l'utilisateur.

Dans le cas où ledit message en provenance de ladite interface 34 de gestion d'appel entrant est un message "id DNS utilisateur, adresse IP", ledit serveur 31 de noms de domaine DNS transmet un message "id AS utilisateur, adresse IP" vers ledit serveur applicatif 30 (ou AS), qui indique l'adresse IP reçue.

Le serveur applicatif 30 (ou AS) reçoit le message en provenance du serveur 31 de noms de domaine DNS (étape 7).

Dans le cas où le message en provenance du serveur 31 de noms de domaine DNS est un message "id AS utilisateur, cause échec", l'étape suivante du procédé, conforme à l'invention, est la fin du traitement (étape 11). Par conséquent, aucune connexion n'est établie par ledit serveur applicatif 30 (ou AS). Dans ce cas, les étapes 8 à 10, décrites ci-dessous, ne sont pas réalisées.

Dans le cas où ledit message en provenance du serveur 31 de noms de domaine DNS est un message "id AS utilisateur, adresse IP", ledit serveur applicatif 30 (ou AS) transmet vers un équipement 12 de gestion d'accès GGSN un paquet de données destiné au terminal mobile 10 de l'utilisateur, en indiquant l'adresse IP reçue en tant qu'adresse du destinataire dudit paquet de données.

Dans le réseau de télécommunications mobiles, ledit équipement 12 de gestion d'accès GGSN reçoit ledit paquet de données, avec ladite adresse IP, en provenance du serveur applicatif 30 (ou AS) (étape 8).

Dans le cas où ladite adresse IP est reconnue comme attribuée à un utilisateur du terminal mobile 10 par ledit équipement 12 de gestion d'accès GGSN, l'étape suivante du procédé, conforme à l'invention, est la fin du traitement (étape 11).

Ledit équipement 12 de gestion d'accès GGSN transmet ledit paquet de donnée vers le terminal mobile 10 de l'utilisateur, par l'intermédiaire de l'équipement 11 de support de service SGSN du réseau de télécommunications mobiles. La connexion, correspondant à l'appel entrant, est alors établie entre ledit réseau 20, 21, 22 de communication et ledit terminal mobile 10 de l'utilisateur.

Dans le cas où ladite adresse IP n'est pas reconnue comme attribuée à un utilisateur du terminal mobile 10, ledit équipement 12 de gestion d'accès GGSN transmet un message de commande "adresse IP, commande" vers le serveur 33 d'allocation d'adresse réseau (ou Radius), pour demander la vérification de l'allocation de l'adresse IP à un utilisateur.

Comme mentionné précédemment, le protocole de transmission, utilisé entre un serveur 33 d'allocation d'adresse réseau (ou Radius) et un équipement 12 de gestion d'accès GGSN, est par exemple le protocole Radius ou le protocole Diameter.

Le serveur 33 d'allocation d'adresse réseau (ou Radius) reçoit le message de commande en provenance de l'équipement 12 de gestion d'accès GGSN (étape 9). Ledit serveur 33 d'allocation d'adresse réseau (ou Radius) contrôle à quel utilisateur a été allouée l'adresse IP transmise.

Dans le cas où l'adresse IP n'a pas été attribuée, ledit serveur 33 d'allocation d'adresse réseau (ou Radius) transmet un message "adresse IP, cause échec" vers l'équipement 12 de gestion d'accès GGSN, indiquant la raison de l'échec de la recherche de l'adresse IP.

Dans le cas où ladite adresse IP est attribuée, ledit serveur 33 d'allocation d'adresse réseau (ou Radius) transmet un message "adresse IP, id réseau utilisateur" vers l'équipement 12 de gestion d'accès GGSN, qui indique l'adresse attribuée à l'utilisateur.

Le serveur 33 d'allocation d'adresse réseau (ou Radius) peut également insérer dans ledit message transmis l'adresse de l'équipement 11 de support de service SGSN, qui est disponible pour établir une connexion dudit réseau 20, 21, 22 de communication avec ledit terminal mobile 10 de l'utilisateur.

Comme mentionné précédemment, le protocole de transmission, utilisé entre un serveur 33 d'allocation d'adresse réseau (ou Radius) et un équipement 12 de gestion d'accès GGSN, est par exemple le protocole Radius ou le protocole Diameter.

Ledit équipement 12 de gestion d'accès GGSN reçoit le message en provenance du serveur 33 d'allocation d'adresse réseau (ou Radius) (étape 10).

Dans le cas où le message en provenance du serveur 33 d'allocation d'adresse réseau (ou Radius) est un message "adresse IP, cause échec", l'étape suivante du procédé, conforme à l'invention, est la fin du traitement (étape 11). Par conséquent, aucune connexion vers le terminal mobile 10 n'est établie par ledit équipement 12 de gestion d'accès GGSN.

Dans le cas où ledit message en provenance du serveur 33 d'allocation d'adresse réseau (ou Radius) est un message "adresse IP, id réseau utilisateur", ledit équipement 12 de gestion d'accès GGSN recherche l'adresse de l'équipement 11 de support de service SGSN dudit réseau de télécommunications mobiles, qui va permettre l'établissement de la connexion vers ledit terminal mobile 10.

Ladite recherche est normalisée par l'ETSI sous le nom de "Network-requested PDP Context activation", soit activation d'une connexion à la demande d'un réseau de communication.

Ladite recherche permet la création d'un lien "PDP Context" vers ledit terminal mobile 10, en fournissant l'identifiant "id réseau utilisateur" à partir de l'identifiant international de l'utilisateur dans le réseau mobile, soit "IMSI" (International Mobile Subcriber Identifier), en fournissant l'adresse IP attribuée à l'utilisateur à partir de l'adresse du "PDP Context" (soit "PDP address") et en fournissant le type de PDP (soit "PDP type") à partir du format de l'adresse IP reçue dans ledit message.

L'identifiant "IMSI", l'adresse du "PDP Context" (soit "PDP address") et le type de PDP (soit "PDP type") sont normalisés par l'ETSI dans la procédure d'activation d'une connexion à la demande d'un réseau de communication.

Dans le cas où ledit message en provenance du serveur 33 d'allocation d'adresse réseau (ou Radius) est un message "adresse IP, id réseau utilisateur, adresse SGSN", ledit équipement 12 de gestion d'accès GGSN commande l'ouverture d'une connexion dans le réseau de télécommunications mobiles.

Ladite commande de connexion est normalisée par l'ETSI sous le nom de "PDU notification request", (Packet Data Unit notification request) pour l'activation d'une connexion à la demande d'un réseau de communication (soit Network-requested PDP Context activation).

Ladite commande de connexion permet la création d'un lien "PDP Context" vers ledit terminal mobile 10, en fournissant l'identifiant "id réseau utilisateur" à partir de l'identifiant international de l'utilisateur dans le réseau mobile, soit "IMSI", en fournissant l'adresse IP à partir de l'adresse du "PDP Context" (soit "PDP address"), en fournissant l'adresse de l'équipement 11 de support de service SGSN à partir de "adresse SGSN" dudit message et en fournissant le type de PD (soit "PDP type") à partir du format de l'adresse IP reçue dans ledit message.

L'identifiant "IMSI", l'adresse du "PDP Context" (soit "PDP address"), l'adresse du SGSN (soit "SGSN address") et le type de PDP (soit "PDP type") sont normalisés par l'ETSI dans la procédure d'activation d'une connexion à la demande d'un réseau de communication.

Le lien "PDP Context" étant créer, ledit équipement 12 de gestion d'accès GGSN transmet ledit paquet de donnée vers le terminal-mobile 10 de l'utilisateur, par l'intermédiaire de l'équipement 11 de support de service SGSN du réseau de télécommunications mobiles. La connexion, correspondant à l'appel entrant, est alors établie entre ledit réseau de communication et ledit terminal mobile 10 de l'utilisateur.

## Revendications

1. Système de gestion d'accès d'une pluralité de réseaux (20, 21, 22) de communication à un terminal mobile (10) raccordé à un réseau de télécommunications mobiles, **caractérisé en ce que** ledit système comporte au moins
- un serveur applicatif (30) apte à :
o transmettre un premier message commande avec un identifiant utilisateur vers un serveur de noms de domaine (31) puis à une interface de recherche d'adresse utilisateur,
o recevoir une adresse réseau d'une interface de recherche d'adresse utilisateur par l'intermédiaire d'un serveur de noms de domaine et
o établir une connexion à partir d' un desdits réseaux (20, 21, 22) de communication vers ledit terminal mobile (10),
- une interface de recherche d'adresse utilisateur (32) apte à attribuer une adresse utilisateur vers une interface de gestion d'appel entrant (34) et à recevoir l'adresse utilisateur et une adresse réseau d'une interface de gestion d'appel entrant,
- une interface (34) de gestion d'appel entrant apte à :
o contrôler l'existence de l'adresse utilisateur
o quand ladite adresse utilisateur n'existe pas, transmettre un troisième message de commande vers une interface de contrôle d'accès (35) par l'intermédiaire d'un serveur d'allocation d'dresse réseau (33) et,
o quand le terminal mobile est accessible et a des droits concernant l'émission d'un appel entrant à partir dudit réseau, transmettre un cinquième message de commande avec l'adresse utilisateur vers le serveur d'allocation d'adresse réseau et à transmettre vers l'interface de recherche d'adresse utilisateur l'adresse utilisateur et l'adresse réseau,
- une interface (35) de contrôle d'accès apte à transmettre un quatrième message de commande vers une interface d'autorisation d'accès (14)
- une interface d'autorisation d'accès (14) apte à vérifier l'accessibilité et les droits de l'utilisateur dudit terminal mobile concernant l'émission d'un appel entrant à partir dudit réseau de communication auprès du registre de localisation
- un serveur d'allocation d'adresse réseau (33) apte à attribuer une adresse réseau et à transmettre l'adresse réseau à l'interface de gestion d'appel entrant.

2. Système de gestion d'accès selon la revendication 1, **caractérisé en ce que** ledit système comprend au moins une interface (34) de gestion d'appel entrant, reliée audit serveur (33) d'allocation d'adresse situé dans ledit réseau (20, 21, 22) de communication, apte à attribuer au moins une adresse réseau audit terminal mobile (10) après traitement de ladite adresse utilisateur à partir d'au moins une donnée d'un deuxième message de commande en provenance de ladite interface (32) de recherche d'adresse utilisateur.

3. Système de gestion d'accès selon l'une quelconque des revendications 1 ou 2, **caractérisé en ce que** ledit système comprend au moins une interface (35) de contrôle d'accès, reliée audit serveur (33) d'allocation d'adresse réseau dudit réseau (20, 21, 22) de communication, apte à vérifier ladite adresse utilisateur dudit terminal mobile (10) à partir d'au moins une donnée d'un troisième message de commande en provenance de ladite interface (34) de gestion d'appel entrant.

4. Système de gestion d'accès selon l'une quelconque des revendications 1 à 3, **caractérisé en ce que** ledit système comprend au moins une interface (14) d'autorisation d'accès, reliée à au moins un registre (13) de localisation dudit réseau de télécommunications mobiles, apte à vérifier ladite adresse réseau après traitement de ladite adresse utilisateur dudit terminal mobile (10) à partir d'au moins une donnée d'un quatrième message de commande en provenance de ladite interface (35) de contrôle d'accès.

5. Interface (32) de recherche d'adresse utilisateur située dans un desdits réseaux (20, 21, 22) de communication, associée audit système de gestion d'accès selon l'une quelconque des revendications 1 à 4, **caractérisé en ce que** ladite interface de recherche d'adresse utilisateur est apte à attribuer une adresse utilisateur vers une interface de gestion d'appel entrant (34) et à recevoir l'adresse utilisateur et une adresse réseau d'une interface de gestion d'appel entrant.

6. Interface (34) de gestion d'appel entrant située dans un desdits réseaux (20, 21, 22) de communication, associée audit système de gestion d'accès selon l'une quelconque des revendications 1 à 4, **caractérisé en ce que** ladite interface de gestion d'appel entrant est apte à
∘ contrôler l'existence de l'adresse utilisateur
∘ quand ladite adresse utilisateur n'existe pas, transmettre un troisième message de commande vers une interface de contrôle d'accès (35) par l'intermédiaire d'un serveur d'allocation d'dresse réseau (33) et,
∘ quand le terminal mobile est accessible et a des droits concernant l'émission d'un appel entrant à partir dudit réseau, transmettre un cinquième message de commande avec l'adresse utilisateur vers le serveur d'allocation d'adresse réseau et à transmettre vers l'interface de recherche d'adresse utilisateur l'adresse utilisateur et l'adresse réseau.

7. Interface (35) de contrôle d'accès située dans un desdits réseaux (20, 21, 22) de communication, associée audit système de gestion d'accès selon l'une quelconque des revendications 1 à 4, **caractérisé en ce que** ladite interface de contrôle d'accès est apte à transmettre un quatrième message de commande vers une interface d'autorisation d'accès (14).

8. Interface (14) d'autorisation d'accès située dans ledit réseau de télécommunications mobiles, associée audit système de gestion d'accès selon l'une quelconque des revendications 1 à 4, **caractérisé en ce que** ladite interface d'autorisation d'accès est apte à vérifier l'accessibilité et les droits de l'utilisateur dudit terminal mobile concernant l'émission d'un appel entrant à partir dudit réseau de communication auprès du registre de localisation.

9. Procédé de gestion d'accès d'une pluralité de réseaux (20, 21, 22) de communication à un terminal mobile (10) raccordé à un réseau de télécommunications mobiles, **caractérisé en ce que** ledit procédé comporte les étapes consistant à :
- transmettre un premier message de commande avec un identifiant utilisateur à partir d'un serveur applicatif (30) vers au moins un serveur (31) de noms de domaine d'un desdits réseaux (20, 21, 22) de communication,
- puis transmettre ledit premier message de commande à partir dudit serveur (31) de noms de domaine vers au moins une interface (32) de recherche d'adresse utilisateur dudit réseau (20, 21, 22) de communication pour attribuer au moins une adresse utilisateur audit terminal mobile (10),
- transmettre un deuxième message de commande avec l'adresse utilisateur à partir de ladite interface (32) de recherche d'adresse utilisateur vers une interface (34) de gestion d'appel entrant dudit réseau (20, 21, 22) de communication,
- contrôler l'existence de ladite adresse utilisateur reçue dans ladite interface (34) de gestion d'appel entrant, reliée à au moins un serveur (33) d'allocation d'adresse réseau,
o quand l'adresse utilisateur n'existe pas,
▪ transmettre à partir de l'interface de gestion d'appel entrant un troisième message de commande vers une interface de contrôle d'accès par l'intermédiaire du serveur d'allocation d'adresse réseau,
▪ transmettre un quatrième message de commande à partir de ladite interface (35) de contrôle d'accès vers au moins une interface (14) d'autorisation d'accès, située dans ledit réseau de télécommunications mobiles,
▪ vérifier, au moyen de l'interface d'autorisation d'accès (14), l'accessibilité audit réseau de télécommunications mobiles et les droits de l'utilisateur dudit terminal mobile concernant l'émission d'un appel entrant à partir dudit réseau de communication auprès du registre (13) de localisation dudit réseau de télécommunications mobiles, relié à ladite interface (14) d'autorisation d'accès,
∘ quand le terminal mobile est accessible et a des droits concernant l'émission d'un apple entrant à partir dudit réseau, transmettre à partir de ladite interface de gestion d'appel entrant (34) un cinquième message de commande avec l'adresse utilisateur vers le serveur d'allocation d'adresse réseau,
- attribuer et transmettre une adresse réseau à partir du serveur d'allocation d'adresse à l'interface de gestion d'appel entrant,
- recevoir à la dite interface de recherche d'adresse utilisateur l'adresse utilisateur et l'adresse réseau de l'interface de gestion d'appel entrant (34),
- recevoir audit serveur applicatif l'adresse réseau d'une interface de recherche d'adresse utilisateur par l'intermédiaire d'un serveur de noms de domaine
- établir, au moyen dudit serveur applicatif, une connexion à partir dudit réseau (20, 21, 22) de communication vers ledit terminal mobile (10).

10. Procédé de gestion d'accès selon la revendication 9, **caractérisé en ce que**, quand ladite adresse utilisateur n'existe pas, ladite interface (34) de gestion d'appel entrant transmet au moins un troisième message de commande vers au moins une interface (35) de contrôle d'accès, par l'intermédiaire dudit serveur (33) d'allocation d'adresse réseau dudit réseau (20, 21, 22) de communication.

11. Procédé de gestion d'accès selon la revendication 9, **caractérisé en ce que**, dans le cas de non-accessibilité ou d'absence de droits pour l'utilisateur dudit terminal mobile (10), ladite interface (34) de gestion d'appel entrant transmet un premier message d'échec vers ladite interface (32) de recherche d'adresse utilisateur, puis ladite interface (32) de recherche d'adresse utilisateur transmet ledit premier message d'échec vers ledit serveur (31) de noms de domaine et vers ledit serveur applicatif (30) pour traitement de manière à ne pas établir la connexion entre ledit réseau (20, 21, 22) de communication et ledit terminal mobile (10).

12. Procédé de gestion d'accès selon la revendication 9, **caractérisé en ce que**, dans le cas d'accessibilité ou d'existence de droits pour l'utilisateur dudit terminal mobile (10), ladite interface (34) de gestion d'appel entrant transmet une adresse utilisateur à partir de ladite interface (34) de gestion d'appel entrant vers ladite interface (32) de recherche d'adresse utilisateur.

13. Procédé de gestion d'accès selon l'une des revendications 9 à 12, **caractérisé en ce que** ledit procédé comporte les étapes consistant à :
- transmettre ladite adresse utilisateur à partir de ladite interface (32) de recherche d'adresse utilisateur vers ledit serveur (31) de noms de domaine, puis vers ledit serveur applicatif (30),
- transmettre au moins une donnée avec ladite adresse utilisateur à partir dudit serveur applicatif (30) vers au moins un équipement (12) de gestion d'accès dudit réseau de télécommunications mobiles.

14. Procédé de gestion d'accès selon la revendication 13, **caractérisé en ce que**, dans le cas où ladite adresse utilisateur n'est pas reconnue, ledit équipement (12) de gestion d'accès transmet pour vérification au moins un cinquième message de commande vers ledit serveur (33) d'allocation d'adresse réseau, puis ledit serveur (33) d'allocation d'adresse réseau transmet ladite adresse vers ladite interface (34) de gestion d'appel entrant.

15. Procédé de gestion d'accès selon l'une des revendications 13 ou 14, **caractérisé en ce que** ledit procédé comporte les étapes consistant à :
- transmettre au moins un deuxième message d'échec à partir de ladite interface (34) de gestion d'appel entrant vers ledit serveur (33) d'allocation d'adresse réseau, puis vers ledit équipement (12) de gestion d'accès, dans le cas où ladite adresse réseau n'est pas attribuée,
- traiter ledit deuxième message d'échec dans ledit équipement (12) de gestion d'accès de manière à ne pas établir la connexion entre ledit réseau (20, 21, 22) de communication et ledit terminal mobile (10).

16. Procédé de gestion d'accès selon la revendication 13, **caractérisé en ce que**, dans le cas de reconnaissance de ladite adresse utilisateur, ledit équipement (12) de gestion d'accès transmet ladite donnée vers au moins un équipement (11) de support de service, puis vers ledit terminal mobile (10), après établissement de la connexion entre ledit réseau (20, 21, 22) de communication et ledit terminal mobile (10).

## Patentansprüche

1. System zur Verwaltung des Zugangs mehrerer Kommunikationsnetzwerke (20, 21, 22) zu einem mobilen Endgerät (10), das an ein mobiles Telekommunikationsnetzwerk angeschlossen ist, **dadurch gekennzeichnet, dass** das System mindestens Folgendes umfasst
- einen Anwendungsserver (30) der zu Folgendem geeignet ist:
• Übertragen einer ersten Befehlsmeldung mit einem Benutzeridentifikator zu einem Domänennamenserver (31), dann zu einer Benutzeradressen-Suchschnittstelle,
• Empfangen einer Netzwerkadresse einer Benutzeradressen-Suchschnittstelle über einen Domänennamenserver und
• Aufbauen einer Verbindung ausgehend von einem der Kommunikationsnetzwerke (20, 21, 22) zu dem mobilen Endgerät (10),
- eine Benutzeradressen-Suchschnittstelle (32), die geeignet ist, um einer Verwaltungsschnittstelle eingehender Anrufe (34) eine Benutzeradresse zuzuweisen und die Benutzeradresse und eine Netzwerkadresse einer Verwaltungsschnittstelle eingehender Anrufe zu empfangen,
- eine Verwaltungsschnittstelle eingehender Anrufe (34), die geeignet ist:
• die Existenz der Benutzeradresse zu prüfen,
• wenn die Benutzeradresse nicht existiert, eine dritte Befehlsmeldung zu einer Zugangsprüfschnittstelle (35) über einen Netzwerkadressen-Zuweisungsserver (33) zu übertragen, und
• wenn das mobile Endgerät zugänglich ist und über Berechtigungen bezüglich des Sendens eines eingehenden Anrufes ausgehend von dem Netzwerk verfügt, eine fünfte Befehlsmeldung mit der Benutzeradresse zu dem Netzwerkadressen-Zuweisungsserver zu übertragen und zu der Benutzeradressen-Suchschnittstelle die Benutzeradresse und die Netzwerkadresse zu übertragen,
- eine Zugangsprüfschnittstelle (35), die geeignet ist, eine vierte Befehlsmeldung zu einer Zugangsgenehmigungsschnittstelle (14) zu übertragen,
- eine Zugangsgenehmigungsschnittstelle (14), die geeignet ist, die Zugänglichkeit und die Befugnisse des Benutzers des mobilen Endgeräts bezüglich des Sendens eines eingehenden Anrufes ausgehend von dem Kommunikationsnetzwerk bei der Teilnehmerdatenbasis zu prüfen,
- einen Netzwerkadressen-Zuweisungsserver (33), der geeignet ist, eine Netzwerkadresse zuzuweisen und die Netzwerkadresse zu der Verwaltungsschnittstelle eingehender Anrufe zu übertragen.

2. Zugangsverwaltungssystem nach Anspruch 1, **dadurch gekennzeichnet, dass** das System mindestens eine Verwaltungsschnittstelle eingehender Anrufe (34) umfasst, die mit dem Adressenzuweisungsserver (33) verbunden ist, der sich in dem Kommunikationsnetzwerk (20, 21, 22) befindet, der geeignet ist, dem mobilen Endgerät (10) mindestens eine Netzwerkadresse nach Verarbeitung der Benutzeradresse ausgehend von mindestens einer Information einer zweiten Befehlsmeldung, die von der Benutzeradressen-Suchschnittstelle (32) kommt, zuzuweisen.

3. Zugangsverwaltungssystem nach einem der Ansprüche 1 oder 2, **dadurch gekennzeichnet, dass** das System mindestens eine Zugangsprüfschnittstelle (35) umfasst, die mit dem Netzwerkadressen-Zuweisungsserver (33) des Kommunikationsnetzwerks (20, 21, 22) verbunden ist, die geeignet ist, die Benutzeradresse des mobilen Endgeräts (10) ausgehend von mindestens einer Information einer dritten Befehlsmeldung, die von der Verwaltungsschnittstelle eingehender Anrufe (34) kommt, zu prüfen.

4. Verwaltungssystem nach einem der Ansprüche 1 bis 3, **dadurch gekennzeichnet, dass** das System mindestens eine Zugangsgenehmigungsschnittstelle (14) umfasst, die mit mindestens einer Teilnehmerdatenbasis (13) des mobilen Telekommunikationsnetzwerkes verbunden ist, die geeignet ist, die Netzwerkadresse nach Verarbeitung der Benutzeradresse des mobilen Endgeräts (10) ausgehend von mindestens einer Information einer vierten Befehlsmeldung, die von der Zugangsprüfschnittstelle (35) kommt, zu prüfen.

5. Benutzeradressen-Suchschnittstelle (32), die sich in einem der Kommunikationsnetzwerke (20, 21, 22) befindet, die mit dem Zugangsverwaltungssystem nach einem der Ansprüche 1 bis 4 assoziiert ist, **dadurch gekennzeichnet, dass** die Benutzeradressen-Suchschnittstelle geeignet ist, eine Benutzeradresse zu einer Verwaltungsschnittstelle eingehender Anrufe (34) zuzuweisen und die Benutzeradresse und eine Netzwerkadresse einer Verwaltungsschnittstelle eingehender Anrufe zu empfangen.

6. Verwaltungsschnittstelle eingehender Anrufe (34), die sich in einem der Kommunikationsnetzwerke (20, 21, 22) befindet, die mit dem Zugangsverwaltungssystem nach einem der Ansprüche 1 bis 4 assoziiert ist, **dadurch gekennzeichnet, dass** die Verwaltungsschnittstelle eingehender Anrufe geeignet ist,
• die Existenz einer Benutzeradresse zu prüfen,
• wenn die Benutzeradresse nicht existiert, eine dritte Befehlsmeldung zu einer Zugangsprüfschnittstelle (35) über einen Netzwerkadressen-Zuweisungsserver (33) zu übertragen, und
• wenn das mobile Endgerät zugänglich ist und Befugnisse bezüglich des Sendens eines eingehenden Anrufes ausgehend von dem Netzwerk hat, eine fünfte Befehlsmeldung mit der Benutzeradresse zu dem Netzwerkadressen-Zuweisungsserver zu übertragen und zu der Benutzeradressen-Suchschnittstelle die Benutzeradresse und die Netzwerkadresse zu übertragen.

7. Zugangsprüfschnittstelle (35), die sich in einem der Kommunikationsnetzwerke (20, 21, 22) befindet, die mit dem Zugangsverwaltungssystem nach einem der Ansprüche 1 bis 4 assoziiert ist, **dadurch gekennzeichnet, dass** die Zugangsprüfschnittstelle geeignet ist, eine vierte Befehlsmeldung zu der Zugangsgenehmigungsschnittstelle (14) zu übertragen.

8. Zugangsgenehmigungsschnittstelle (14), die sich in dem mobilen Telekommunikationsnetzwerk befindet, die mit dem Zugangsverwaltungssystem nach einem der Ansprüche 1 bis 4 assoziiert ist, **dadurch gekennzeichnet, dass** die Zugangsgenehmigungsschnittstelle geeignet ist, die Zugänglichkeit und die Befugnisse des Benutzers des mobilen Endgeräts bezüglich des Sendens eines eingehenden Anrufes ausgehend von dem Kommunikationsnetzwerk bei der Teilnehmerdatenbasis zu prüfen.

9. Verfahren zur Zugangsverwaltung mehrerer Kommunikationsnetzwerke (20, 21, 22) zu einem mobilen Endgerät (10), das an ein mobiles Telekommunikationsnetzwerk angeschlossen ist, **dadurch gekennzeichnet, dass** das Verfahren die folgenden Schritte umfasst:
- Übertragen einer ersten Befehlsmeldung mit einem Benutzeridentifikator ausgehend von einem Anwendungsserver (30) zu mindestens einem Domänennamenserver (31) eines der Kommunikationsnetzwerke (20, 21, 22),
- dann Übertragen der ersten Befehlsmeldung ausgehend von dem Domänennamenserver (31) zu mindestens einer Benutzeradressen-Suchschnittstelle (32) des Kommunikationsnetzwerkes (20, 21, 22), um dem mobilen Endgerät (10) mindestens eine Benutzeradresse zuzuweisen,
- Übertragen einer zweiten Befehlsmeldung mit der Benutzeradresse ausgehend von der Benutzeradressen-Suchschnittstelle (32) zu einer Verwaltungsschnittstelle eingehender Anrufe (34) des Kommunikationsnetzwerkes (20, 21, 22),
- Prüfen der Existenz der in der Verwaltungsschnittstelle eingehender Anrufe (34) empfangenen Benutzeradresse, die mit mindestens einem Netzwerkadressen-Zuweisungsserver (33) verbunden ist,
• wenn die Benutzeradresse nicht existiert,
▪ ausgehend von der Verwaltungsschnittstelle eingehender Anrufe Übertragen einer dritten Befehlsmeldung zu einer Zugangsprüfschnittstelle über den Netzwerkadressen-Zuweisungsserver,
▪ ausgehend von der Zugangsprüfschnittstelle (35) Übertragen einer vierten Befehlsmeldung zu mindestens einer Zugangsgenehmigungsschnittstelle (14), die sich in dem mobilen Telekommunikationsnetzwerk befindet,
▪ mittels der Zugangsgenehmigungsschnittstelle (14) Prüfen der Zugänglichkeit des mobilen Telekommunikationsnetzwerkes und der Befugnisse des Benutzers des mobilen Endgeräts bezüglich des Sendens eines eingehenden Anrufes ausgehend von dem Kommunikationsnetzwerk bei der Teilnehmerdatenbasis (13) des mobilen Telekommunikationsnetzwerkes, das mit der Zugangsgenehmigungsschnittstelle (14) verbunden ist,
• wenn das mobile Endgerät zugänglich ist und Befugnisse bezüglich des Sendens eines eingehenden Anrufs ausgehend von dem Netzwerk hat, ausgehend von der Verwaltungsschnittstelle eingehender Anrufe (34) Übertragen einer fünften Befehlsmeldung mit der Benutzeradresse zu dem Netzwerkadressen-Zuweisungsserver,
- Zuweisen und Übertragen einer Netzwerkadresse ausgehend von dem Adressenzuweisungsserver zu der Verwaltungsschnittstelle eingehender Anrufe,
- Empfangen an der Benutzeradressen-Suchschnittstelle der Benutzeradresse und der Netzwerkadresse der Verwaltungsschnittstelle eingehender Anrufe (34),
- an dem Anwendungsserver Empfangen der Netzwerkadresse einer Benutzeradressen-Suchschnittstelle über einen Domänennamenserver,
- mittels des Anwendungsservers Aufbauen einer Verbindung ausgehend von dem Kommunikationsnetzwerk (20, 21, 22) zu dem mobilen Endgerät (10).

10. Zugangsverwaltungsverfahren nach Anspruch 9, **dadurch gekennzeichnet, dass**, wenn die Benutzeradresse nicht existiert, die Verwaltungsschnittstelle eingehender Anrufe (34) mindestens eine dritte Befehlsmeldung zu mindestens einer Zugangsprüfschnittstelle (35) über den Netzwerkadressen-Zuweisungsserver (33) des Kommunikationsnetzwerks (20, 21, 22) überträgt.

11. Zugangsverwaltungsverfahren nach Anspruch 9, **dadurch gekennzeichnet, dass** in dem Fall der Nichtzugänglichkeit oder des Fehlens von Befugnissen für den Benutzer des mobilen Endgeräts (10) die Verwaltungsschnittstelle eingehender Anrufe (34) eine erste Versagensmeldung zu der Benutzeradressen-Suchschnittstelle (32) überträgt, die Benutzeradressen-Suchschnittstelle (32) dann die erste Versagensmeldung zu dem Domänennamenserver (31) und zu dem Anwendungsserver (30) zur Verarbeitung derart überträgt, dass die Verbindung zwischen dem Kommunikationsnetzwerk (20, 21, 22) und dem mobilen Endgerät (10) nicht aufgebaut wird.

12. Zugangsverwaltungsverfahren nach Anspruch 9, **dadurch gekennzeichnet, dass** in dem Fall der Nichtzugänglichkeit oder des Fehlens von Befugnissen für den Benutzer des mobilen Endgeräts (10) die Verwaltungsschnittstelle eingehender Anrufe (34) eine Benutzeradresse ausgehend von der Verwaltungsschnittstelle eingehender Anrufe (34) zu der Benutzeradressen-Suchschnittstelle (32) überträgt.

13. Zugangsverwaltungsverfahren nach einem der Ansprüche 9 bis 12, **dadurch gekennzeichnet, dass** das Verfahren die Schritte umfasst, die aus Folgendem bestehen:
- Übertragen der Benutzeradresse ausgehend von der Benutzeradressen-Suchschnittstelle (32) zu dem Domänennamenserver (31) und dann zu dem Anwendungsserver (30),
- Übertragen mindestens einer Information mit der Benutzeradresse ausgehend von dem Anwendungsserver (30) zu mindestens einer Zugangsverwaltungsausstattung (12) des mobilen Telekommunikationsnetzes.

14. Zugangsverwaltungsverfahren nach Anspruch 13, **dadurch gekennzeichnet, dass** in dem Fall, in dem die Benutzeradresse nicht erkannt wird, die Zugangsverwaltungsausstattung (12) zur Prüfung mindestens eine fünfte Befehlsmeldung zu dem Netzwerkadressen-Zuweisungsserver (33) überträgt, der Netzwerkadressen-Zuweisungsserver (33) dann die Adresse zu der Verwaltungsschnittstelle eingehender Anrufe (34) überträgt.

15. Zugangsverwaltungsverfahren nach einem der Ansprüche 13 oder 14, **dadurch gekennzeichnet, dass** das Verfahren die Schritte umfasst, die aus Folgendem bestehen:
- Übertragen mindestens einer zweiten Versagensmeldung ausgehend von der Verwaltungsschnittstelle eingehender Anrufe (34) zu dem Netzwerkadressen-Zuweisungsserver (33), dann zu der Zugangsverwaltungsausstattung (12), in dem Fall, in dem die Netzwerkadresse nicht zugewiesen ist,
- Verarbeitung der zweiten Versagensmeldung in der Zugangsverwaltungsausstattung (12) derart, dass die Verbindung zwischen dem Kommunikationsnetzwerk (20, 21, 22) und dem mobilen Endgerät (10) nicht aufgebaut wird.

16. Zugangsverwaltungsverfahren nach Anspruch 13, **dadurch gekennzeichnet, dass** in dem Fall des Erkennens der Benutzeradresse die Zugangsverwaltungsausstattung (12) die Information zu mindestens einer Dienstunterstützungsausstattung (11), dann zu dem mobilen Endgerät (10) überträgt, nachdem die Verbindung zwischen dem Kommunikationsnetzwerk (20, 21, 22) und dem mobilen Endgerät (10) aufgebaut wurde.

## Claims

1. System for managing access by a plurality of communication networks (20, 21, 22) to a mobile terminal (10) connected to a mobile telecommunication network, **characterized in that** said system has at least
- an application server (30) that is capable of:
° transmitting a first control message with a user identifier to a domain name server (31) and then to a user address search interface,
∘ receiving a network address of a user address search interface by means of a domain name server and
° setting up a connection from one of said communication networks (20, 21, 22) to said mobile terminal (10),
- a user address search interface (32) that is capable of assigning a user address to an incoming call management interface (34) and of receiving the user address and a network address of an incoming call management interface,
- an incoming call management interface (34) that is capable of:
° checking the existence of the user address,
° when said user address does not exist, transmitting a third control message to an access control interface (35) by means of a network address allocation server (33) and,
∘ when the mobile terminal is accessible and has rights concerning the sending of an incoming call from said network, transmitting a fifth control message with the user address to the network address allocation server and of transmitting the user address and the network address to the user address search interface,
- an access control interface (35) that is capable of transmitting a fourth control message to an access authorization interface (14),
- an access authorization interface (14) that is capable of checking the accessibility and the rights of the user of said mobile terminal concerning the sending of an incoming call from said communication network with the location register,
- a network address allocation server (33) that is capable of assigning a network address and of transmitting the network address to the incoming call management interface.

2. Access management system according to Claim 1, **characterized in that** said system comprises at least one incoming call management interface (34), connected to said address allocation server (33) situated in said communication network (20, 21, 22), that is capable of assigning at least one network address to said mobile terminal (10) following processing of said user address on the basis of at least one datum in a second control message from said user address search interface (32).

3. Access management system according to either of Claims 1 and 2, **characterized in that** said system comprises at least one access control interface (35), connected to said network address allocation server (33) and said communication network (20, 21, 22), that is capable of checking said user address of said mobile terminal (10) on the basis of at least one datum in a third control message from said incoming call management interface (34).

4. Access management system according to any one of Claims 1 to 3, **characterized in that** said system comprises at least one access authorization interface (14), connected to at least one location register (13) of said mobile telecommunication network, that is capable of checking said network address following processing of said user address of said mobile terminal (10) on the basis of at least one datum in a fourth control message from said access control interface (35).

5. User address search interface (32) situated in one of said communication networks (20, 21, 22), and associated with said access management system according to any one of Claims 1 to 4, **characterized in that** said user address search interface is capable of assigning a user address to an incoming call management interface (34) and of receiving the user address and a network address of an incoming call management interface.

6. Incoming call management interface (34) situated in one of said communication networks (20, 21, 22), and associated with said access management system according to any one of Claims 1 to 4, **characterized in that** said incoming call management interface is capable of
∘ checking the existence of the user address,
∘ when said user address does not exist, transmitting a third control message to an access control interface (35) by means of a network address allocation server (33) and,
∘ when the mobile terminal is accessible and has rights concerning the sending of an incoming call from said network, transmitting a fifth control message with the user address to the network address allocation server and of transmitting the user address and the network address to the user address search interface.

7. Access control interface (35) situated in one of said communication networks (20, 21, 22), and associated with said access management system according to any one of Claims 1 to 4, **characterized in that** said access control interface is capable of transmitting a fourth control message to an access authorization interface (14).

8. Access authorization interface (14) situated in said mobile telecommunication network, and associated with said access management system according to any one of Claims 1 to 4, **characterized in that** said access authorization interface is capable of checking the accessibility and the rights of the user of said mobile terminal concerning the sending of an incoming call from said communication network with the location register.

9. Method for managing access by a plurality of communication networks (20, 21, 22) to a mobile terminal (10) connected to a mobile telecommunication network, **characterized in that** said method has the steps involving:
- transmitting a first control message with a user identifier from a navigation server (30) to at least one domain name server (31) of one of said communication networks (20, 21, 22),
- and then transmitting said first control message from said domain name server (31) to at least one user address search interface (32) of said communication network (20, 21, 22) in order to assign at least one user address to said mobile terminal (10),
- transmitting a second control message with the user address from said user address search interface (32) to an incoming call management interface (34) of said communication network (20, 21, 22),
- checking the existence of said user address received in said incoming call management interface (34), which is connected to at least one network address allocation server (33),
° when the user address does not exist,
• transmitting a third control message from the incoming call management interface to an access control interface by means of the network address allocation server,
• transmitting a fourth control message from said access control interface (35) to at least one access authorization interface (14), which is situated in said mobile telecommunication network,
• checking, by means of the access authorization interface (14), the accessibility for said mobile telecommunication network and the rights of the user of said mobile terminal concerning the sending of an incoming call from said communication network with the location register (13) of said mobile telecommunication network, which is connected to said access authorization interface (14),
∘ when the mobile terminal is accessible and has rights concerning the sending of an incoming call from said network, transmitting a fifth control message with the user address from said incoming call management interface (34) to the network address allocation server,
- assigning and transmitting a network address from the address allocation server to the incoming call management interface,
- receiving the user address and the network address of the incoming call management interface (34) at said user address search interface,
- receiving the network address of a user address search interface at said application server by means of a domain name server,
- setting up, by means of said application server, a connection from said communication network (20, 21, 22) to said mobile terminal (10).

10. Access management method according to Claim 9, **characterized in that**, when said user address does not exist, said incoming call management interface (34) transmits at least one third control message to at least one access control interface (35), by means of said network address allocation server (33) of said communication network (20, 21, 22).

11. Access management method according to Claim 9, **characterized in that**, in the event of inaccessibility or absence of rights for the user of said mobile terminal (10), said incoming call management interface (34) transmits a first failure message to said user address search interface (32), and then said user address search interface (32) transmits said first failure message to said domain name server (31) and to said application server (30) for processing so as not to set up the connection between said communication network (20, 21, 22) and said mobile terminal (10).

12. Access management method according to Claim 9, **characterized in that**, in the event of accessibility or existence of rights for the user of said mobile terminal (10), said incoming call management interface (34) transmits a user address from said incoming call management interface (34) to said user address search interface (32).

13. Access management method according to one of Claims 9 to 12, **characterized in that** said method has the steps involving:
- transmitting said user address from said user address search interface (32) to said domain name server (31), and then to said application server (30),
- transmitting at least one datum with said user address from said application server (30) to at least one piece of access management equipment (12) of said mobile telecommunication network.

14. Access management method according to Claim 13, **characterized in that**, in the event of said user address not being recognized, said access management equipment (12) transmits at least one fifth control message to said network address allocation server (33) for checking, and then said network address allocation server (33) transmits said address to said incoming call management interface (34).

15. Access management method according to either of Claims 13 and 14, **characterized in that** said method has the steps involving:
- transmitting at least one second failure message from said incoming call management interface (34) to said network address allocation server (33), and then to said access management equipment (12), in the event of said network address not being assigned,
- processing said second failure message in said access management equipment (12) so as not to set up the connection between said communication network (20, 21, 22) and said mobile terminal (10) .

16. Access management method according to Claim 13, **characterized in that**, in the event of said user address being recognized, said access management equipment (12) transmits said datum to at least one piece of service support equipment (11), and then to said mobile terminal (10), following set-up of the connection between said communication network (20, 21, 22) and said mobile terminal (10).
